# EUROPÄISCHE PATENTSCHRIFT

(11) **EP 3 237 240 B1**
(45) Veröffentlichungstag und Bekanntmachung des Hinweises auf die Patenterteilung: **01.07.2020**
(21) Anmeldenummer: 16710458.7
(22) Anmeldetag: 18.03.2016
(51) Int. Cl.: B60D 1/62, B60D 5/00, B61G 5/10, H02G 3/32, H02G 11/00

(54) **KABELFÜHRUNG FÜR WAGENÜBERGANGSLEITUNGEN**
CABLE GUIDE FOR CARRIAGE TRANSITION LINES
DISPOSITIF DE GUIDAGE DE CÂBLES POUR DES LIGNES DE COMMUNICATION ENTRE WAGONS

(30) Priorität: 23.03.2015 AT 502292015
(43) Veröffentlichungstag der Anmeldung: 01.11.2017
(73) Patentinhaber: Siemens Mobility Austria GmbH, 1210 Wien (AT)
(72) Erfinder: KRIVAN, Thomas, 1220 Wien (AT)
(74) Vertreter: Deffner, Rolf
(86) Internationale Anmeldenummer: PCT/EP2016/055960
(87) Internationale Veröffentlichungsnummer: WO 2016/150852

(56) Entgegenhaltungen:
- DE-A1- 19 705 895
- DE-A1-102005 019 876
- DE-A1-102007 041 663
- DE-C1- 4 323 540
- JP-A- 2012 144 230

## Beschreibung

### Technisches Gebiet

Die Erfindung betrifft eine Kabelführung für Wagenübergangsleitungen.

### Stand der Technik

Werden einzelne Schienenfahrzeuge zu einem Zugverband zusammengestellt, so sind die einzelnen Wagen gebräuchlicherweise mit einer Vielzahl an elektrischen, pneumatischen, optischen etc. Die Anmeldeschrift JP 2012 144230 A zeigt z.B. ein Schienenfahrzeug aus dem Stand der Technik. Leitungen jeweils mit dem nächsten gekoppelten Wagen oder einer Lokomotive verbunden. Diese Wagenübergangsleitungen können dabei rasch lösbar ausgeführt sein, wie es bei häufig veränderten Zugkonfigurationen (z.B. bei Reisezugwagen) erforderlich ist, oder diese Wagenübergangsleitungen (Jumper Cable) können nur in einem Wartungsbetrieb getrennt werden. Letztere Ausführung ist insbesondere für fest zusammengestellte und nur äußerst selten getrennte Züge, wie U-Bahnen geeignet. Die räumliche Anordnung der Wagenübergangsleitungen erfolgt nach Maßgabe des zu Verfügung stehenden Bauraums, wobei eine Anordnung unterhalb, bzw. seitlich eines Passagierübergangs häufig eingesetzt wird. Auch oberhalb eines Passagierübergangs können Wagenübergangsleitungen angeordnet sein, diese Ausführungsform ist insbesondere bei Straßenbahnen gebräuchlich, da bei diesen Schienenfahrzeuge oft elektrische Einrichtungen auf dem Dach angeordnet sind. Werden Wagenübergangsleitungen oberhalb eines Passagierübergangs angeordnet, so ist sicherzustellen, dass die Leitungen den Passagierübergang nicht berühren. Dies wird gemäß dem Stand der Technik mittels drehbarer Kabelhängungen in Form einer galgenartigen Konstruktion gelöst. Diese Kabelhängungen weisen jedoch einen beträchtlichen vertikalen Bauraumbedarf auf. Aus dem Stand der Technik ist eine bewegliche Lagerung von Kabelbündeln bekannt, so zeigt die Anmeldeschrift DE 10 2005 019876 A1 eine solche Lagerung, bei welcher jedoch ein aufwendiger Gleitkörper die Kabel umfasst. Die Anmeldeschrift DE 10 2007 041663 A1 offenbart eine Leitungsführung zwischen einem ortfesten und einem beweglichen Anschlußpunkt, umfassend eine biegsame Trageinheit und aus dieser hervorstehende Haltelemente.

### Darstellung der Erfindung

Der Erfindung liegt daher die Aufgabe zugrunde, eine Kabelführung für Wagenübergangsleitungen an Schienenfahrzeugen anzugeben, welche einen Kabelverlauf zwischen gekoppelten Schienenfahrzeugen im Dachbereich bei sehr geringem vertikalen Bauraumbedarf erlaubt.

Die Aufgabe wird durch ein Schienenfahrzeug mit den Merkmalen des Anspruchs 1 gelöst. Vorteilhafte Ausgestaltungen sind Gegenstand untergeordneter Ansprüche.

Dem Grundgedanken der Erfindung nach wird eine Kabelführung für Wagenübergangsleitungen an einem Schienenfahrzeug zur Führung der Wagenübergangsleitungen zu einem weiteren gekoppelten Schienenfahrzeug aufgebaut, wobei eine Platte im stirnseitigen Dachbereich des Schienenfahrzeugs angeordnet ist, und ein Führungsbügel mit der Platte verbunden ist, wobei zwischen der Platte und dem Führungsbügel ein Zwischenraum besteht, in welchem die Wagenübergangsleitungen in Fahrzeugquerrichtung kraftlos verschiebbar angeordnet sind.

Dadurch ist der Vorteil erzielbar, einen sehr geringen vertikalen Bauraumbedarf vorhalten zu müssen und dabei eine sichere Führung der Kabel bei jeder dem Schienenfahrzeug möglichen Kurvenfahrt gewährleisten zu können.
Insbesondere kann dabei der Passagierraum im Übergangsbereich bei gegebenem Lichtraumprofil des Fahrzeugs mit einer größeren Innenhöhe ausgeführt werden als bei bekannten Lösungen.

Erfindungsgemäß ist eine Platte vorgesehen, welche im stirnseitigen Dachbereich des Schienenfahrzeugs horizontal angeordnet ist und welche zu einem Teil in den Übergangsbereich, d.h. über die Stirnwand des Schienenfahrzeugs hinaus ragt. Diese Platte ist mit mindestens einem Führungsbügel verbunden, welche an der Oberseite der Platte angeordnet ist. Dadurch entsteht ein schlitzförmiger Freiraum zwischen der Platte und dem Führungsbügel, in welchem die Wagenübergangsleitungen verlaufen. Die Wagenübergangsleitungen sind in diesem schlitzförmigen Freiraum kraftlos bewegbar, wozu die Kabeldurchmesser kleiner als der vertikale Abstand zwischen der Oberseite der Platte und der Unterseite des Führungsbügels zu wählen sind. Solcherart können die Wagenübergangsleitungen bei jeder dem Schienenfahrzeug möglichen Kurvenfahrt, bzw. Kuppen- oder Senkenfahrt eine optimale Position einnehmen, bei welcher sie weder knicken noch den eigentlichen Übergang zwischen den Fahrzeugen berühren noch gespannt (auf Zug belastet) sind. Die Länge der Wagenübergangsleitungen ist so zu bemessen, dass alle zulässigen Relativpositionen der Schienenfahrzeuge zueinander die genannten Bedingungen erfüllen.

Ein wesentlicher Vorteil gegenständlicher Erfindung liegt darin, dass keine sich vertikal erstreckenden Kabelhängungen erforderlich sind und die zugehörigen Drehlagerungen ebenfalls entfallen können.

Eine weitere Ausführungsform der Erfindung sieht vor, die Kabel in einer schlauchförmigen Umhüllung zu führen. Dadurch ist der Vorteil erzielbar, einen besseren Schutz der Kabel (Wagenübergangsleitungen) gewährleisten zu können. Weiters kann bei mehreren gleichzeitig geführten Wagenübergangsleitungen durch das Vorsehen derselben Durchmesser der schlauchförmigen Umhüllungen die Gefahr des Verklemmens der Leitungen verhindert werden. Dies ist insbesondere vorteilhaft, wenn die eigentlichen Leitungen jeweils stark unterschiedliche Durchmesser aufweisen.

Die schlauchförmige Umhüllung kann sich dabei über die gesamte Länge der Wagenübergangsleitungen erstrecken, d.h. von einer Befestigungsstelle des ersten Wagens zu der Befestigungsstelle an dem zweiten, gekoppelten Wagen. Dadurch ist ein besonders guter Schutz der Leitungen, insbesondere vor UV-Licht, Eis, Verschmutzung oder Funkenflug von Stromabnehmern gegeben. Ist dieser Schutz nicht erforderlich, so können die Leitungen auch mit sogenannten Scheuerschutz-Protektoren ausgestattet werden. Diese Scheuerschutz-Protektoren stellen kurze schlauchförmige Umhüllungen dar, welche in bestimmten Abständen an den Wagenübergangsleitungen angeordnet werden und dabei die Kontaktfläche zu der Platte bilden, wodurch die Scheuerbelastung der Kabel selbst aufgehoben oder wesentlich reduziert wird.

Gegenständliche Erfindung ist neben elektrischen Leitungen auch auf alle weiteren in flexiblen Leitungen führbare Fluide oder nichtstoffliche Medien (optische Leitungen) anwendbar.

In weiterer Fortbildung der Erfindung ist es empfehlenswert, die mit den Wagenübergangsleitungen bzw. den schlauchförmigen Umhüllungen in Kontakt tretenden Oberflächen der Platte oder des Führungsbügels zumindest teilweise mit einer reibwertmindernden Oberfläche auszustatten. Dabei können reibwertmindernde Beläge aufgebracht werden, wobei beispielsweise Polytetrafluoräthylen anwendbar ist, welches typischerweise in Plattenform an den Kontaktstellen angeordnet werden kann. Dadurch kann die Reibung zwischen den Wagenübergangsleitungen, bzw. deren schlauchförmigen Umhüllungen und der Platte bzw. dem Führungsbügel deutlich reduziert werden.

Eine weitere vorteilhafte Ausführungsform sieht vor, die Platte mit einen in Richtung eines gekoppelten Schienenfahrzeugs hin orientierten, nach oben abgewinkelten Abschnitt auszustatten. Dadurch ist der Vorteil erzielbar, die Führung der Wagenübergangsleitungen verbessern zu können, wobei ein Durchhängen und Berühren des Wagenübergangs sicher verhindert wird.

Bei Fahrzeugen für den Einsatz in Gebieten mit zu erwartendem Schneefall bzw. Eisansatz sind geeignete Gegenmaßnahmen zu treffen um ein Verstopfen des Freiraums zwischen dem Führungsbügel und der Platte zu verhindern, da dieses zu einer unzulässigen Zugbelastung an den Wagenübergangsleitungen führen kann wenn die erforderliche freie Beweglichkeit der Leitungen eingeschränkt ist.

Dies kann beispielsweise durch das Anordnen von Ausnehmungen (Bohrungen) in dem Führungsbügel erfolgen, durch welche der Schnee aus dem Freiraum zwischen der Platte und dem Führungsbügel entweichen kann. Dazu ist insbesondere an den horizontalen Enden des Führungsbügels eine geeignete Öffnung vorzusehen. Eine weitere Möglichkeit der Verhinderung des Eis- und Schneeansatzes besteht darin, den Führungsbügel wesentlich länger zu gestalten, beispielsweise über die gesamte Länge der Platte. Solcherart ist der Freiraum in Form eines schlitzförmigen Tunnels ausgebildet, in welchen nur mehr an der Stelle der Öffnung in Richtung eines gekoppelten Fahrzeugs die Möglichkeit des Eintritts von Schnee besteht wenn die entgegengesetzte Öffnung verschlossen wird.

### Kurzbeschreibung der Zeichnungen

Es zeigen beispielhaft:
- **Fig.1**: Wagenübergangsleitungen Ansicht von oben.
- **Fig.2**: Wagenübergangsleitungen, Schrägansicht.

### Ausführung der Erfindung

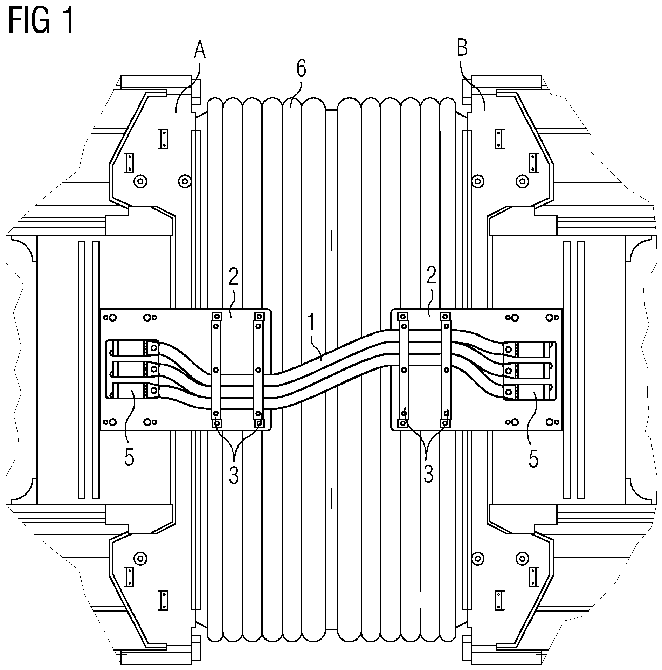

**Fig.1** zeigt beispielhaft und schematisch zwei gekoppelte Schienenfahrzeuge A, B welche mittels Wagenübergangsleitungen 1 verbunden sind. Zwei Passagierschienenfahrzeuge A, B sind miteinander gekuppelt dargestellt, wobei ein typischer Passagierübergang 6 die beiden Schienenfahrzeuge A, B verbindet. Die Schienenfahrzeuge A, B sind in einer Ansicht von oben dargestellt, wobei jeweils ein Wagenkastenrohbau gezeigt ist. Im stirnseitigen Dachbereich beider Schienenfahrzeuge A, B ist jeweils eine Platte 2 angeordnet, welche sich über einen Teil des Dachbereichs erstreckt und über einen Teil des Passagierübergangs 6 ragt. Die Platte 2 ist jeweils mit dem Schienenfahrzeug A, B verbunden und weist einen vertikalen Abstand zu dem Passagierübergang 6 auf. Wagenübergangsleitungen 1 verlaufen zwischen lösbaren Verbindungsstellen 5 des ersten Schienenfahrzeugs A zu lösbaren Verbindungsstellen 5 des zweiten Schienenfahrzeugs B, die Wagenübergangsleitungen 1 sind somit leicht zu trennen. Es sind beispielhaft drei Wagenübergangsleitungen 1 dargestellt. Die Wagenübergangsleitungen 1 liegen jeweils auf der Platte 2 auf und erstrecken sich frei hängend zwischen diesen Platten 2. Dabei ist die Länge der Wagenübergangsleitungen 1 so bemessen, dass sie bei jeder zulässige relative Position der Schienenfahrzeuge A, B zueinander sowohl zu dem Übergang 6 beabstandet bleiben als auch immer entspannt, d.h. niemals auf Zug belastet sind. An der Platte 2 sind in gezeigtem Ausführungsbeispiel je zwei Führungsbügel 3 angeordnet, welche einen Freiraum zwischen der Platte 2 und dem Führungsbügel 3 vorgeben, in welchem die Wagenübergangsleitungen 1 geführt sind. In diesem Freiraum sind die Wagenübergangsleitungen 1 kraftlos verschiebbar, sodass sie ohne Beeinträchtigungen zu jeder zulässigen Relativposition der Schienenfahrzeuge A, B zueinander die sich naturgemäß ergebende Lage einnehmen können. Dabei können die Wagenübergangsleitungen 1 in einer schlauchförmigen Umhüllung geführt sein, wodurch die Beschädigungsgefahr reduziert ist.

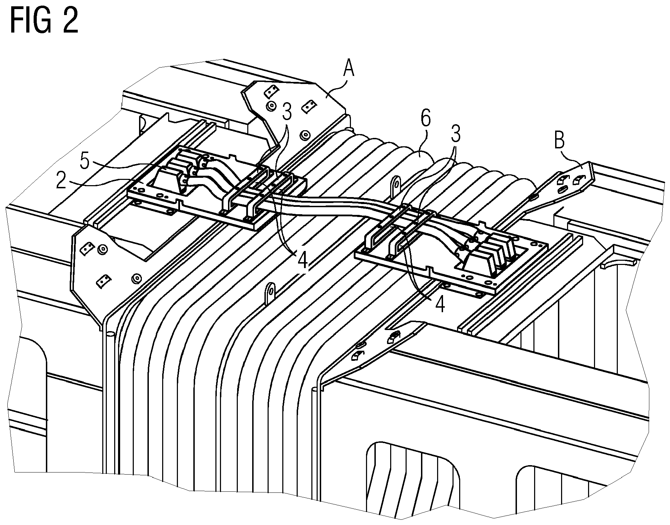

**Fig.2** zeigt beispielhaft und schematisch die Schienenfahrzeuge A, B aus Fig.1 in einer Schrägansicht. Dabei ist ein reibwertmindernder Belag 4 im Bereich der Auflagefläche der Wagenübergangsleitungen 1 an der Platte 2 angeordnet. Weiters ist in dieser Schrägansicht ein in Richtung des jeweils gekoppelten Schienenfahrzeugs A, B nach oben abgewinkelter Abschnitt der Platte 2 dargestellt.

### Liste der Bezeichnungen

- 1: Wagenübergangsleitung
- 2: Platte
- 3: Führungsbügel
- 4: Reibwertmindernder Belag
- 5: Lösbare Verbindung
- 6: Passagierübergang
- A: erstes Schienenfahrzeug
- B: zweites Schienenfahrzeug

## Patentansprüche

1. Schienenfahrzeug (A), umfassend mindestens ein Wagenende mit einer Kabelführung für Wagenübergangsleitungen (1) zur Führung der Wagenübergangsleitungen (1) zu einem weiteren gekoppelten Schienenfahrzeug (B), wobei eine Platte (2) und ein Führungsbügel (3) vorgesehen sind, **dadurch gekennzeichnet, dass**
die Platte (2) im stirnseitigen Dachbereich des Schienenfahrzeugs (A) angeordnet ist, und mindestens ein Führungsbügel (3) mit der Platte verbunden ist, wobei zwischen der Platte (2) und dem Führungsbügel (3) ein Zwischenraum besteht, in welchem die Wagenübergangsleitungen (1) in Fahrzeugquerrichtung verschiebbar angeordnet sind, wobei die Durchmesser der Wagenübergangsleitungen (1) kleiner als der vertikale Abstand zwischen der Oberseite der Platte (2) und der Unterseite des Führungsbügels (3) bemessen sind.

2. Schienenfahrzeug (A), nach Anspruch 1,
**dadurch gekennzeichnet, dass** die Wagenübergangsleitungen (1) in ihrem gesamten Verlauf in einer schlauchförmigen Umhüllung geführt sind.

3. Schienenfahrzeug (A), nach Anspruch 1 oder 2,
**dadurch gekennzeichnet, dass** die mit den Wagenübergangsleitungen (1) bzw. den schlauchförmigen Umhüllungen in Kontakt tretenden Oberflächen der Platte (2) oder des Führungsbügels (3) zumindest teilweise mit einer reibwertmindernden Oberfläche (4) ausgestattet sind.

4. Schienenfahrzeug (A), nach einem der Ansprüche 1 bis 3,
**dadurch gekennzeichnet, dass** alle in dem zwischen der Platte (2) und dem Führungsbügel (3) geführten schlauchförmigen Umhüllungen denselben Außendurchmesser aufweisen.

5. Schienenfahrzeug (A), nach einem der Ansprüche 1 bis 4,
**dadurch gekennzeichnet, dass** die Platte (2) einen in Richtung eines gekoppelten Schienenfahrzeugs (B) hin orientierten, nach oben abgewinkelten Abschnitt umfasst.

## Claims

1. Rail vehicle (A), comprising at least one carriage end having a cable guide for carriage transition lines (1) for guiding the carriage transition lines (1) to a further, coupled rail vehicle (B), wherein a plate (2) and a guide bracket (3) are provided,
**characterised in that**
the plate (2) is arranged in the end-face region of the roof of the rail vehicle (A), and at least one guide bracket (3) is connected to the plate, wherein there is an intermediate space between the plate (2) and the guide bracket (3) in which the carriage transition lines (1) are arranged such that they may be displaced in the transverse direction to the vehicle without force, wherein the diameters of the carriage transition lines (1) are dimensioned to be smaller than the vertical spacing between the upper side of the plate (2) and the underside of the guide bracket (3).

2. Rail vehicle (A) according to claim 1,
**characterised in that** the carriage transition lines (1) are guided in a hose-like sheath over their entire length.

3. Rail vehicle (A) according to claim 1 or 2, **characterised in that** the surfaces of the plate (2) or guide bracket (3) that come into contact with the carriage transition lines (1) or hose-like sheaths are at least in some cases provided with a friction-reducing surface (4).

4. Rail vehicle (A) according to one of claims 1 to 3, **characterised in that** all the hose-like sheaths guided between the plate (2) and the guide bracket (3) have the same external diameter.

5. Rail vehicle (A) according to one of claims 1 to 4, **characterised in that** the plate (2) includes an upwardly angled section that is oriented in the direction of a coupled rail vehicle (B).

## Revendications

1. Véhicule ferroviaire (A), comprenant au moins une extrémité de wagon avec un guidage de câbles pour des lignes entre wagons (1) pour guider les lignes entre wagons (1) vers un autre véhicule ferroviaire couplé (B), une plaque (2) et un étrier de guidage (3) étant prévus, **caractérisé en ce que** la plaque (2) est agencée dans la zone de toit côté frontal du véhicule ferroviaire (A) et au moins un étrier de guidage (3) est relié à la plaque, entre la plaque (2) et l'étrier de guidage (3) étant situé un espace intermédiaire dans lequel les lignes entre wagons (1) sont agencées de manière à pouvoir être déplacées dans le sens transversal du véhicule, les diamètres des lignes entre wagons (1) étant inférieurs à la distance verticale entre la face supérieure de la plaque (2) et la face inférieure de l'étrier de guidage (3).

2. Véhicule ferroviaire (A) selon la revendication 1, **caractérisé en ce que** les lignes entre wagons (1) sont guidées sur l'ensemble de leur tracé dans une enveloppe en forme de tuyau.

3. Véhicule ferroviaire (A) selon la revendication 1 ou 2, **caractérisé en ce que** les surfaces de la plaque (2) ou de l'étrier de guidage (3) entrant en contact avec les lignes entre wagons (1) resp. les enveloppes en forme de tuyau sont dotées au moins en partie d'une surface (4) réduisant le coefficient de frottement.

4. Véhicule ferroviaire (A) selon l'une des revendications 1 à 3, **caractérisé en ce que** toutes les enveloppes en forme de tuyau qui passent entre la plaque (2) et l'étrier de guidage (3) ont le même diamètre extérieur.

5. Véhicule ferroviaire (A) selon l'une des revendications 1 à 4, **caractérisé en ce que** la plaque (2) comprend une partie repliée vers le haut et orientée en direction d'un véhicule ferroviaire couplé (B).
